# EUROPÄISCHE PATENTSCHRIFT

(11) **EP 2 904 367 B1**
(45) Veröffentlichungstag und Bekanntmachung des Hinweises auf die Patenterteilung: **04.01.2017**
(21) Anmeldenummer: 13770892.1
(22) Anmeldetag: 26.09.2013
(51) Int. Cl.: G01M 3/32

(54) **FOLIENKAMMER UND VERFAHREN ZUR LECKAGEDETEKTION AN EINEM NICHT FORMSTARREN PRÜFLING**
FILM CHAMBER AND METHOD FOR LEAK DETECTION ON A NON-RIGID SPECIMEN
CHAMBRE PELLICULAIRE ET PROCÉDÉ DE DÉTECTION DE FUITE SUR UN ÉCHANTILLON NON INDÉFORMABLE

(30) Priorität: 01.10.2012 DE 102012217945
(43) Veröffentlichungstag der Anmeldung: 12.08.2015
(73) Patentinhaber: Inficon GmbH, 50968 Köln (DE)
(72) Erfinder: DECKER, Silvio, 50999 Köln (DE)
(74) Vertreter: dompatent von Kreisler Selting Werner - Partnerschaft von Patent- und Rechtsanwälten mbB
(86) Internationale Anmeldenummer: PCT/EP2013/070101
(87) Internationale Veröffentlichungsnummer: WO 2014/053393

(56) Entgegenhaltungen:
- EP-B1- 0 741 288

## Beschreibung

Die Erfindung betrifft eine Folienkammer und ein Verfahren zur Detektion einer Leckage an einem nicht formstarren Prüfling, beispielsweise einer Lebensmittelverpackung. Nicht formstarre Prüflinge weisen eine flexible Struktur auf, die bei Druckänderungen nachgibt. Bei zu großen Druckunterschieden zwischen dem Innendruck des Prüflings und dessen Umgebungsdruck besteht die Gefahr, dass der Prüfling platzt oder zumindest beschädigt wird.

Herkömmlicherweise werden nicht formstarre Prüflinge mit einem Prüfgas gefüllt und das Prüfgas im Abgasstrom des Pumpsystems, dass zur Herstellung der erforderlichen Druckdifferenzen verwendet wird, gemessen. Alternativ kann die Verwendung eines bestimmten Prüfgases entfallen, wenn der Sensor an das Füllgas innerhalb des Prüflings angepasst ist. Bei diesem Messverfahren können Einflüsse des Umgebungsgases das Messergebnis verfälschen.

Es ist bekannt, zur Leckagedetektion Folienkammern als Prüfkammern einzusetzen, bei denen zumindest ein Wandbereich und vorzugsweise die gesamte Prüfkammer aus einem flexiblen, vorzugsweise elastisch verformbaren Material, wie zum Beispiel aus einer Folie besteht. Der flexible Wandbereich ist in dem Bereich der Kammer ausgebildet, in der sich der Prüfling während der Leckagemessung befindet. Beim Reduzieren des Drucks innerhalb der Kammer schmiegt sich die flexible Kammerwand an den Prüfling an, wodurch das Kammervolumen reduziert wird. Dadurch sind störende Einflüsse, wie beispielsweise Druckänderungen durch Temperaturschwankungen, reduziert. Zudem stützt der sich anschmiegende flexible Wandbereich den Prüfling und verhindert ein Verformen oder gar Platzen des Prüflings. Dies ist insbesondere bei formschwachen Prüflingen aus einem weichen Material, wie beispielsweise Verpackungen, von Vorteil. Derartige Folienprüfkammern sind beispielsweise in JP-A62-112027, EP 0 152 981 A1 und EP 0 741 288 B1 beschrieben.

Bei der Leckagedetektion mit Hilfe von evakuierten Folienkammern wird der Druckanstieg in der Kammer nicht ausschließlich durch eine Leckage des Prüflings beeinflusst. Vielmehr steigt der Druck in der Folienkammer im Bereich außerhalb des Prüflings auch durch Desorption von Gas an, das sich aus dem Material des Prüflings oder der Folienkammer löst. Zudem kann der Druckanstieg virtuell durch einen Druckausgleich innerhalb der Folienkammer beeinflusst werden.

Diese zusätzlichen den Druckanstieg beeinflussenden Größen stören die Messung und sind als Messfehler zu berücksichtigen.

Der Erfindung liegt die Aufgabe zugrunde, ein genaues Verfahren zur Leckagedetektion an einem nicht formstarren Prüfling zu schaffen.

Das erfindungsgemäße Verfahren ist definiert durch Patentanspruch 1.

Erfindungsgemäß wird während der Druckmessung mindestens auf den flexiblen Wandbereich der Folienkammer ein äußerer Überdruck ausgeübt, der den Druck in der Folienkammer im Bereich außerhalb des Prüflings und den Druck innerhalb des Prüflings übersteigt. Hierzu ist eine Druckbeaufschlagungsvorrichtung zum Erzeugen des äußeren Drucks auf den Wandbereich vorgesehen.

Der äußere Druck bewirkt eine Kompression des weichen Prüflings, wodurch sich dler Druck innerhalb des Prüflings ändert. Die Leckrate ist dabei proportional zu dlem Quadrat des Druckunterschiedes zwischen der Folienkammer und dem Prüflinge. Die Desorption wird durch den äußeren Druck hingegen nicht beeinflusst.

Die Druckbeaufschlagung erfolgt auf die Folienkammer periodisch, das heißt der Druck wird bis zu einem vorgegeben Schwellenwert erhöht und anschließend wieder abgesenkt, wobei das Erhöhen und anschließende Absenken des Drucks periodisch wiederholt wird. Dadurch ändert sich auch der Druck innerhalb des Prüflings periodisch und somit auch die Leckrate des Prüflings, so dass auch der Druckanstieg in der Folienkammer mit einem periodischen Anteil überlagert wird. Dieser periodische Anteil ist unabhängig von der Desorption und kann als Maß für die Leckrate des Prüflings verwendet werden.

Hierbei können die Amplitude und/oder die Phase des sich einstellenden periodischen Druckanstiegsverlaufs ausgewertet werden. Als Phase kann die Phasenverschiebung zwischen dem periodischen Signal des von außen auf die Folienkammer ausgeübten Drucks und des periodischen Anteils des Druckanstiegs innerhalb der Folienkammer verwendet werden. Der periodische Druckanstieg beeinflusst vornehmlich die Leckrate des Prüflings und zumindest zu einem geringeren Anteil oder gar nicht die störende Desorption von Gasen, so dass die Leckrate des Prüflings von den virtuellen Leckagen getrennt werden kann.

Die äußere Druckbeaufschlagung auf den flexiblen Wandbereich kann pneumatisch oder hydraulisch mit Hilfe einer Fluiddruckkammer erfolgen. Hierbei kann die Folienkammer in einer Fluiddruckkammer enthalten sein. Alternativ oder ergänzend kann ein mechanischer Druck zumindest auf einen flexiblen Wandbereich der Folienkammer ausgeübt werden. Der mechanische Druck kann mit Hilfe eines Stempels, beispielsweise mit Hilfe eines von zwei gegenüber liegenden Seiten auf die Folienkammer wirkenden Stempels, erzeugt werden.

Im Folgenden werden anhand der Figuren Ausführungsbeispiele der Erfindung näher erläutert. Es zeigen:
- Fig. 1: ein Ausführungsbeispiel unter Verwendung eines pneumatischen Überdrucks,
- Fig. 2: ein Ausführungsbeispiel unter Verwendung eines hydraulischen Drucks,
- Fig. 3: ein Ausführungsbeispiel unter Verwendung eines mechanischen Drucks,
- Fig. 4: den zeitlichen Verlauf des äußeren Überdrucks, und
- Fig. 5: den sich einstellenden Verlauf des Druckanstiegs in der Folienkammer.

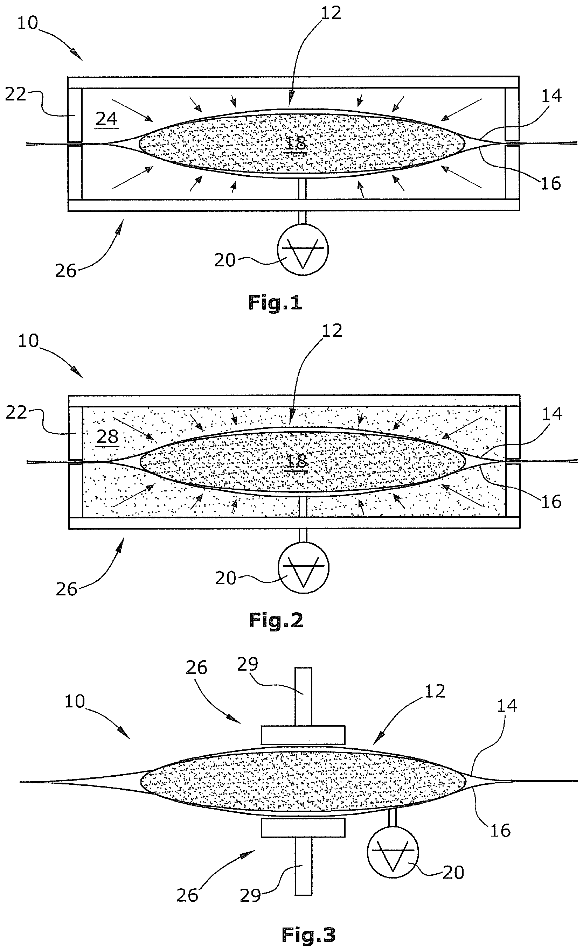

Bei den Ausführungsbeispielen nach den Fign. 1-3 wird die Folienkammer 12 jeweils aus zwei Folien 14, 16 gebildet, die in deren Randbereich aufeinander gelegt und fest miteinander verschweißt oder verklebt sind. Innerhalb der Folienkammer 12 ist der Prüfling 18 enthalten, bei dem es sich typischerweise um eine flexible, nichtformstarre Lebensmittelverpackung handeln kann. Zur vereinfachten Darstellung ist der Prüfling 18 oval dargestellt.

Nach Einbringen des Prüflings 18 in die Folienkammer 12 wird die Folienkammer evakuiert und der Druckverlauf innerhalb der Folienkammer 12 im Bereich außerhalb des Prüflings 18 mit Hilfe eines Manometers 20 erfasst.

Bei dem Ausführungsbeispiel nach Fig. 1 ist die Folienkammer 12 in einer Fluiddruckkammer 22 enthalten, die periodisch wechselnd mit einem Gas gefüllt wird und wobei das Gas anschließend nach Erreichen eines vorgegebenen Schwellenwerts wieder aus der Druckkammer 22 entweicht. Dieses Ansteigen und anschließende Absenken des Drucks in der Druckkammer 22 außerhalb der Folienkammer 12 wird periodisch wiederholt. Die Pfeile in Fig. 1 deuten den sich einstellenden, von allen Seiten gleichmäßig homogen auf die Folienkammer 12 wirkenden pneumatischen Druck an.

Das Ausführungsbeispiel nach Fig. 2 unterscheidet sich von dem Ausführungsbeispiel nach Fig. 1 dadurch, dass die Druckbeaufschlagungsvorrichtung 26 eine mit einer Flüssigkeit 28 befüllte Fluiddruckkammer 22 ist. Auch bei dem Ausführungsbeispiel nach Fig. 2 wird der sich einstellende hydraulische Druck periodisch erhöht und reduziert, während der Druck innerhalb der Folienkammer 12 gemessen wird.

Bei dem Ausführungsbeispiel nach Fig. 3 weist die Druckbeaufschlagungsvorrichtung 26 zwei Stempel 28 auf, die aus einander gegenüber liegenden Seiten gegen die Folienkammer 12 drücken. Hierbei deuten die Pfeile in Fig. 3 den periodischen Druckanstieg mit jeweils anschließender Druckabsenkung des mechanischen Drucks der Stempel 28 auf die Folienkammer 12 an.

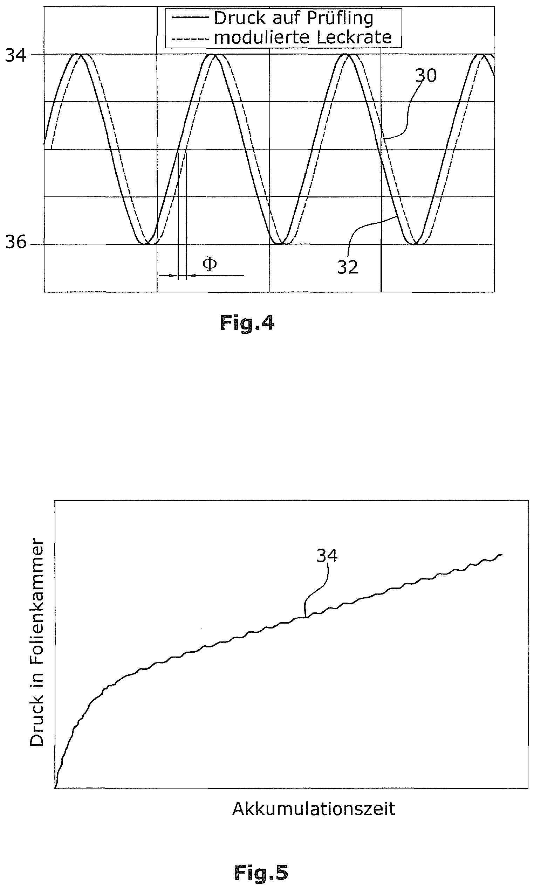

In Fig. 4 ist zum einen der periodische Verlauf 30 des auf die Folienkammer 12 und auf den Prüfling 18 wirkenden Überdrucks durch die Druckbeaufschlagungsvorrichtung 26 über der Zeit aufgetragen. In jeder Periode wird der äußere Überdruck bis zu einem oberen Schwellenwert 34 erhöht und anschließend bis auf einen unteren Schwellenwert 36 abgesenkt. Dabei stellt sich in der Folienkammer 12 im Bereich außerhalb des Prüflings 18 ein dem periodischen Wechsel des äußeren Überdrucks folgender Druckverlauf 32 ein. Der Druckverlauf 32 folgt dem Verlauf 30 des äußeren Überdrucks mit einer Phasenverschiebung Φ. Sowohl die sich aus den Schwellenwerten 34, 36 ergebende Amplitude des Druckverlaufs 32 als auch dessen Phasenverschiebung Φ können zur Ermittlung der Leckrate des Prüflings verwendet werden.

In Fig. 5 ist der Druckverlauf 34 innerhalb der Folienkammer 12 über der Zeit dargestellt. Der Druckverlauf 34 ist auf Grund einer Leckage des Prüflings 18 über der Zeit ansteigend. Durch die periodische Druckbeaufschlagung von außen auf die Folienkammer 12 weist der Druckanstieg 34 ein überlagertes periodisches Signal auf, das dem Druckverlauf 32 gemäß Fig. 4 entspricht.

## Patentansprüche

1. Verfahren zur Bestimmung der Leckrate an einem nicht formstarren Prüfling (18), mit den Schritten:
Einbringen des Prüflings (18) in eine evakuierbare Folienkammer (12) mit mindestens einem Wandbereich aus einem flexiblen Material,
Absenken des Drucks in der Folienkammer (12) außerhalb des Prüflings (18) und
Messen des Druckverlaufs (32) innerhalb der Folienkammer (12) außerhalb des Prüflings (18),
**dadurch gekennzeichnet , dass**
wobei während der Druckmessung mindestens auf den flexiblen Wandbereich ein äußerer Überdruck periodisch bis zum Erreichen eines vorgegeben Schwellenwerts und mit anschließendem Entfernen des Überdrucks wiederholt ausgeübt wird, welcher Überdruck den Druck in der Folienkammer (12) und außerhalb des Prüflings (18) und den Druck innerhalb des Prüflings (18) übersteigt.

2. Verfahren nach Anspruch 1, **dadurch gekennzeichnet, dass** der Überdruck auf den Wandbereich pneumatisch oder hydraulisch erzeugt wird.

3. Verfahren nach Anspruch 1 oder 2, **dadurch gekennzeichnet, dass** der Überdruck auf den Wandbereich mechanisch erzeugt wird.

4. Verfahren nach einem der vorhergehenden Ansprüche, **dadurch gekennzeichnet, dass** zur Bestimmung der Leckrate die Amplitude und/oder die Phase des sich einstellenden, periodischen Druckanstiegsverlaufs ausgewertet wird.

## Claims

1. A method for determining the leakage rate on a non-rigid specimen (18), comprising the steps of:
introducing the specimen (18) into a film chamber (12) which can be evacuated and has at least one wall region made of a flexible material,
lowering the pressure in the film chamber (12) outside of the specimen (18), and
measuring the pressure gradient (32) within the film chamber (12) outside of the specimen (18),
**characterized in that**
an outer overpressure is repeatedly exerted periodically at least on the flexible wall region during said pressure measurement until a predetermined threshold is reached, with the overpressure being subsequently released, wherein said overpressure exceeds the pressure in the film chamber (12) and outside of the specimen (18) and the pressure inside the specimen (18).

2. The method of claim 1, **characterized in that** the overpressure on the wall region is generated pneumatically or hydraulically.

3. The method of claim 1 or 2, **characterized in that** the overpressure on the wall region is generated in a mechanical manner.

4. The method of one of the preceding claims, **characterized in that** for the determination of the leakage rate, the amplitude and/or the phase of the occurring periodic pressure increase gradient are evaluated.

## Revendications

1. Procédé pour déterminer un taux de fuites sur un échantillon non indéformable (18), avec les étapes suivantes :
introduction de l'échantillon (18) dans une chambre pelliculaire (12) susceptible d'être vidée et comportant au moins une zone de paroi en un matériau flexible,
réduction de la pression dans la chambre pelliculaire (12) en dehors de l'échantillon (18) et
mesurage de l'évolution de la pression (32) à l'intérieur de la chambre pelliculaire (12) en dehors de l'échantillon (18),
**caractérisé en ce que**, pendant le mesurage de la pression, de manière répétitive, au moins sur la zone de paroi flexible une surpression extérieure est appliquée périodiquement jusqu'à obtention d'une valeur seuil prédéterminée et avec, ensuite, annulation de la surpression, laquelle surpression dépasse la pression dans la chambre pelliculaire (12) et en dehors de l'échantillon (18) et la pression à l'intérieur de l'échantillon (18).

2. Procédé selon la revendication 1, **caractérisé en ce que** la surpression est engendrée sur la zone de paroi de manière pneumatique ou hydraulique.

3. Procédé selon la revendication 1 ou 2, **caractérisé en ce que** la surpression est engendrée sur la zone de paroi de manière mécanique.

4. Procédé selon l'une des revendications précédentes, **caractérisé en ce que**, pour déterminer le taux de fuites, l'amplitude et/ou la phase de l'évolution de la montée de pression périodique qui s'établit, est exploitée.
